Europäisches Patentamt

European Patent Office

Office européen des brevets

(19)

(11) Veröffentlichungsnummer : **0 085 932**
**B1**

(12) **EUROPÄISCHE PATENTSCHRIFT**

(45) Veröffentlichungstag der Patentschrift :
16.04.86

(51) Int. Cl.⁴ : **F 02 B  37/12**

(21) Anmeldenummer : 83100955.0

(22) Anmeldetag : 02.02.83

(54) Ladedruck-Regelvorrichtung für Brennkraftmaschinen.

(30) Priorität : 04.02.82 DE 3203805

(43) Veröffentlichungstag der Anmeldung :
17.08.83 Patentblatt 83/33

(45) Bekanntmachung des Hinweises auf die Patenterteilung : 16.04.86 Patentblatt 86/16

(84) Benannte Vertragsstaaten :
DE FR GB IT SE

(56) Entgegenhaltungen :
DE-A- 2 716 470
GB-A- 2 034 402
GB-A- 2 078 856
US-A- 3 941 035

(73) Patentinhaber : BAYERISCHE MOTOREN WERKE
Aktiengesellschaft
Postfach 40 02 40 Petuelring 130
D-8000 München 40 (DE)

(72) Erfinder : Emonts, Johannes, Dipl.-Ing.
Lindenstrasse 12
D-8065 Grossberghofen (DE)

(74) Vertreter : Schweiger, Erwin
c/o Bayerische Motoren Werke AG - AJ-35 Postfach
40 02 40 Petuelring 130
D-8000 München 40 (DE)

Jouve, 18, rue St-Denis, 75001 Paris, France

EP 0 085 932 B1

**Beschreibung**

Die Erfindung bezieht sich auf eine Ladedruck-Regelvorrichtung der Bauart nach dem Oberbegriff des Anspruches 1.

Bei bekannten Ladedruck-Regelvorrichtungen dieser Bauart gemäß DE-A-2 716 470 und DE-A-2 928 902 besteht die Steuervorrichtung in der stromab der Drosselklappe und an die zweite Kammer des Stellantriebes angeschlossenen Steuerleitung aus einem Umschalt- bzw. Rückschlagventil, das die auf das Bypass-Ventil wirkende Schließkraft nur dann senkt, wenn der Druck in der Saugleitung stromab der Drosselklappe unter dem Atmosphärendruck liegt. Eine deutliche Herabsetzung der Schließkraft zur Vermeidung eines unnötigen Aufbaues von Ladedruck vor der Drosselklappe tritt dadurch nur im unteren Teillastbereich auf, in dem auch mit üblicher, eine atmosphärisch belüftete zweite Kammer aufweisender Ladedruck-Regelung keine hohen Lade- und Abgasdrücke erreicht werden. Daher ist der mit dieser Ladedruck-Regelung erreichbare Vorteil relativ gering.

Der Erfindung liegt die Aufgabe zugrunde, eine Ladedruck-Regelvorrichtung der Bauart nach dem Oberbegriff des Anspruches 1 zu schaffen, mit der im wesentlichen im gesamten Teillastbereich der unnötige Aufbau von Ladedruck vermieden wird. D. h. es soll kein überschüssiger Ladedruck aufgebaut werden, der durch unvollständiges Öffnen der Drosselklappe wieder verringert werden muß.

Diese Aufgabe wird erfindungsgemäß durch die kennzeichnenden Merkmale des Anspruches 1 gelöst. Durch die erfindungsgemäße Ladedruck-Regelvorrichtung werden nahezu im gesamten Teillastbereich der unnötige Ladedruck vor der teilweise geschlossenen Drosselklappe und der Abgasdruck vor der Abgasturbine verringert. Die Wirksamkeit dieser Ladedruck-Regelung steigt mit abnehmendem Druck in der Saugleitung. Bei Brennkraftmaschinen mit hohen Ladedrücken ist diese Ladedruck-Regelung besonders zweckmäßig. Die erfindungsgemäße Ladedruck-Regelvorrichtung ermöglicht eine Senkung des Kraftstoffverbrauches durch folgende Einflüsse: 1. Die Verluste durch Ladungswechselarbeit werden verringert. 2. Durch niedrigere Ladelufttemperatur und weniger heißes Restgas wird der Betrieb mit magererem Gemisch und günstigeren Zündwinkeln möglich. 3. Durch den geringen Restgasanteil wird eine schnellere und vollständigere Verbrennung erzielt. Als weiterer Vorteil ergibt sich eine Verbesserung der Abhängigkeit der Last vom Lastwunschsignal (Gaspedalstellung).

Ein besonders kostengünstiger Aufbau der erfindungsgemäßen Ladedruck-Regelvorrichtung wird durch die Merkmale des Anspruches 2 erreicht. In diesem Zusammenhang ist zu bemerken, daß auch das Bypass-Ventil kostengünstiger ist als ohne Anwendung der Erfindung, da eine schwächere Schließfeder verwendet wird.

In der Zeichnung ist ein Ausführungsbeispiel der Erfindung dargestellt. Es zeigen:

Figur 1 eine schematische Darstellung einer Brennkraftmaschine mit einem Abgasturbolader und

Figur 2 ein Diagramm, das den Ladedruckverlauf über der Drehzahl bei Vollast darstellt.

Eine Brennkraftmaschine 1 ist mit einem Abgasturbolader 2 ausgerüstet. Der Abgasturbolader 2 besteht aus einer Abgasturbine 3 und einem Ladegebläse 4. Vom Ladegebläse 4 führt eine Ladeluftleitung 5 über einen Ladeluftkühler 6 zu einer Drosselklappe 7, die einer Saugleitung 8 der Brennkraftmaschine 1 vorgeschaltet ist.

Die Abgasturbine 3 ist an eine Abgasleitung 9 der Brennkraftmaschine 1 angeschlossen. In einer zur Abgasturbine 3 parallelen Bypass-Leitung 10 ist ein Bypass-Ventil 11 angeordnet, das den an der Abgasturbine 3 vorbeifließenden Abgasstrom und damit die Abgasturbine 3 steuert.

Das Bypass-Ventil 11 weist in seinem Stellantrieb als Antriebselement eine Membrane 12 auf, durch die ein Ventilkörper 13 des Bypass-Ventiles 11 mittels einer Verbindungsstange 14 bewegt werden kann. Die Membrane 12 trennt eine erste Kammer 15 und eine zweite Kammer 16 voneinander. Die erste Kammer 15 ist über eine erste Steuerleitung 17 stromab des Ladegebläses 4 an die Ladeluftleitung 5 angeschlossen, so daß die Membrane 12 in bekannter Weise durch den Ladedruck in Öffnungsrichtung beaufschlagt wird. Die zweite Kammer 16 enthält eine in Schließrichtung des Bypass-Ventiles 11 wirkende Schließfeder 18 und ist über eine zweite Steuerleitung 19 stromab der Drosselklappe 7 an die Saugleitung 8 angeschlossen. In die Steuerleitung 19 ist eine Steuervorrichtung 20 eingeschaltet. Die Steuervorrichtung 20 umfaßt ein Druckbegrenzungsventil 21 und parallel dazu ein Rückschlagventil 22, das zur Saugleitung 8 hin öffnet.

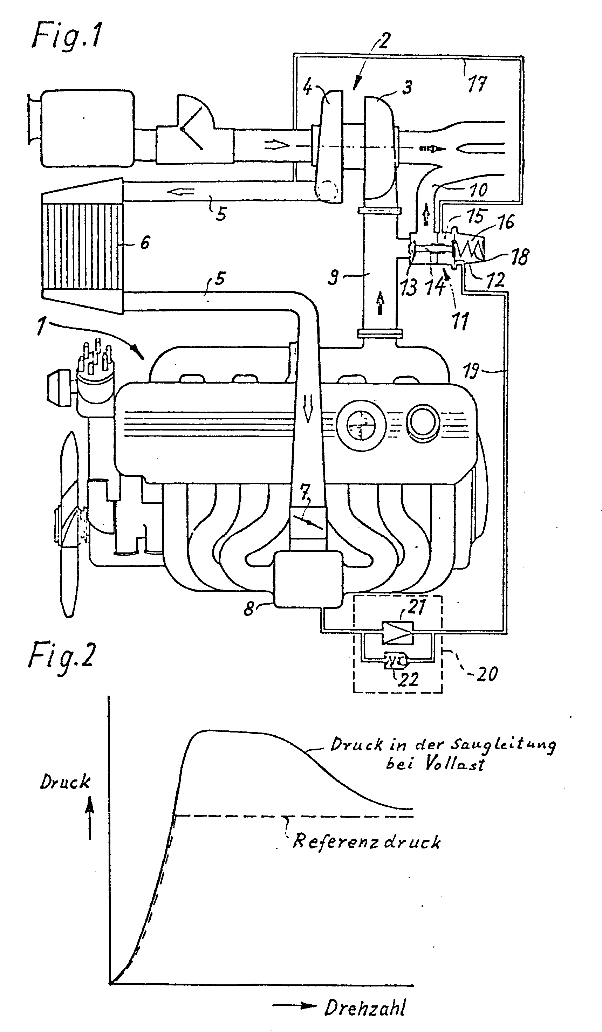

Bei üblichen Ladedruck-Regelungen ist die zweite Kammer 16 mit der Atmosphäre verbunden und enthält eine Schließfeder, deren Vorspannung auf den bei Vollast gewünschten Ladedruck abgestimmt ist. Im Gegensatz dazu hat die Schließfeder 18 bei der vorliegenden Ladedruck-Regelvorrichtung eine erheblich herabgesetzte Vorspannung. Das Druckbegrenzungsventil 21 begrenzt den Druck in der zweiten Steuerleitung 19 auf einen Referenzdruck. Der Referenzdruck ist niedriger als der niedrigste Druck in der Saugleitung 8, der sich im oberen Drehzahlbereich bei Vollast einstellt (Fig. 2). Durch den Referenzdruck wird auf die Membrane 12 eine in Schließrichtung des Bypass-Ventiles 11 wirkende Kraft ausgeübt. Die Vorspannung der Schließfeder 18 ist gegenüber der vorstehend beschriebenen üblichen Auslegung um den Betrag dieser Druckkraft verringert, so daß der bisherige Vollast-Druckverlauf in der Saugleitung 8 erhalten bleibt. Beim Übergang zur Teillast durch Schließen der Drosselklappe 7 sinkt der Druck in der Saugleitung 8. Beim Unterschreiten der Referenzdrucklinie (Fig. 2) stellt sich in der Saugleitung 8 und in der zweiten Kammer 16 des Bypass-Ventiles 11 derselbe Druck ein. Die zweite Kammer 16 wird hierzu über das Rückschlagventil 22 entlüftet. Wenn der Druck in der Saugleitung 8 unterhalb der Referenzdrucklinie liegt, wird die Schließkraft des Bypass-Ventiles verringert und ggf. mit Ausnahme des Schließkraftanteils der Schließfeder 18 völlig aufgehoben oder durch entsprechenden Unterdruck in der Saugleitung 8 sogar negativ.

Im Gegensatz zur oben erwähnten üblichen Ladedruck-Regelung wird das Bypass-Ventil 11 bei der vorliegenden Ladedruck-Regelvorrichtung über einen wesentlich größeren Betriebsbereich offengehalten. Dadurch werden nahezu im gesamten Teillastbereich der unnötige Ladedruck vor der teilweise geschlossenen Drosselklappe und der Abgasgegendruck vor der Abgasturbine verringert.

## Patentansprüche

1. Ladedruck-Regelvorrichtung für Brennkraftmaschinen, insbesondere gemischverdichtende Brennkraftmaschinen,

mit einem Bypass-Ventil (11) in einer Bypass-Leitung (10) einer Abgasturbine (3),

einem Stellantrieb für das Bypass-Ventil (11) und

einer zwei Kammern (15, 16) trennenden Membrane (12) als Antriebselement im Stellantrieb,

wobei die erste Kammer (15) über eine erste Steuerleitung (17) direkt mit Ladeluft beaufschlagt ist und

die zweite Kammer (16) eine Schließfeder (18) enthält sowie

über eine Steuervorrichtung (20) und eine zweite Steuerleitung (19) stromab einer Drosselklappe (7) an die Saugleitung (8) angeschlossen ist, dadurch gekennzeichnet,

daß die Steuervorrichtung (20) ein Druckbegrenzungsventil (21) enthält,

das in der zweiten Kammer (16) einen auf einen vorbestimmten Referenzdruck begrenzten Überdruck einstellt, und

daß die Vorspannkraft der Schließfeder (18) und die durch den Referenzdruck an der Membrane (12) erzeugte Schließkraft gemeinsam auf die im Öffnungssinn wirkenden Kräfte aus Ladedruck und Abgas abgestimmt sind.

2. Ladedruck-Regelvorrichtung nach Anspruch 1, dadurch gekennzeichnet,

daß das Druckbegrenzungsventil (21) parallel zu einem Rückschlagventil (22) angeordnet ist.

## Claims

1. Intake manifold pressure regulating apparatus for internal combustion engines, especially mixture-compressing internal combustion engines,

having a by-pass valve (11) in a by-pass conduit (10) of an exhaust turbine (3),

a setting drive for the by-pass valve (11) and

a diaphragm (12), separating two chambers (15, 16), as a drive element in the setting drive,

where the first chamber (15) is charged with charging air directly through a first control conduit (17) and

the second chamber (16) contains a closure spring (18) and is also

connected to the intake conduit (8) downstream of a throttle flap (7) by way of a control device (20) and a second control conduit (19), characterised in that

the control device (20) contains a pressure-limiting valve (21),

which sets, in the second chamber (16), an excess pressure limited to a pre-determined reference pressure, and

in that the initial stress force of the closure spring (18) and the closure force generated by the reference pressure on the diaphragm (12) are attuned in common to the forces from intake manifold pressure and exhaust gas which act in the opening direction.

2. Intake manifold pressure regulating apparatus according to Claim 1, characterised in that

the pressure-limiting valve (21) is arranged parallel to a non-return valve (22).

## Revendications

1. Dispositif de réglage de pression de suralimentation pour moteurs à combustion interne, notamment pour moteurs à combustion interne à compression de mélange,

avec une soupape de dérivation (11) sur une canalisation de dérivation (10) d'une turbine à gaz d'échappement (3),

avec un entraînement de réglage pour la soupape de dérivation (11)

avec une membrane (12) séparant en deux chambres (15, 16) et jouant le rôle d'élément d'entraînement dans l'entraînement de réglage,

la première chambre (15) étant alimentée directement avec l'air de suralimentation par l'intermédiaire d'une première canalisation de commande (17),

la seconde chambre (16) contenant le ressort de fermeture (18) et étant raccordée par l'intermédiaire du dispositif de commande (20) et une seconde canalisation de commande (19) à la canalisation d'aspiration (8) en aval d'un clapet d'étranglement (7)

dispositif caractérisé en ce que :

le dispositif de commande (20) comprend une soupape de limitation de la pression (21) qui règle dans la seconde chambre (16) une surpression limitée à une pression de référence prédéterminée,

la précontrainte du ressort de fermeture (18) et l'effort de fermeture exercé par la pression de référence sur la membrane (12) étant, en commun, accordés aux efforts exercés par la pression de suralimentation et les gaz d'échappement et agissant dans le sens de l'ouverture.

2. Dispositif de réglage de la pression de suralimentation selon la revendication 1, caractérisé en ce que la soupape de limitation de la pression (21) est disposée en parallèle sur une soupape de retenue (22).

4

0 085 932

**Fig.1**

**Fig.2**

Druck in der Saugleitung
bei Vollast

Druck

Referenzdruck

Drehzahl